(19) Europäisches Patentamt
European Patent Office
Office européen des brevets

(11) Publication number: 0 236 548
A1

(12) # EUROPEAN PATENT APPLICATION

(21) Application number: 86114317.0

(22) Date of filing: 16.10.86

(51) Int. Cl.³: B 01 J 29/08
//C10G11/05

(30) Priority: 18.10.85 US 788931

(43) Date of publication of application:
16.09.87 Bulletin 87/38

(84) Designated Contracting States:
AT BE CH DE ES FR GB GR IT LI LU NL SE

(71) Applicant: KATALISTIKS INTERNATIONAL, Inc.
1501 Sulgrave Avenue
Baltimore Maryland 21209(US)

(72) Inventor: Cormier, William Edward, Jr.
4140 Henhawk Court
Ellicott City Maryland 21043(US)

(72) Inventor: Woltermann, Gerald Martin
440 Bear Branch Road
Westminster Maryland 21157(US)

(72) Inventor: Magee, John Storey
12205 Mt. Albert Road
Ellicott City Maryland 21043(US)

(74) Representative: Eggert, Hans-Gunther, Dr.
Räderscheidtstrasse 1
D-5000 Köln 41(DE)

(54) Improved cracking catalyst and method of manufacture.

(57) Cracking catalysts having improved activity and having selectivity to the gasoline fraction ($C_5$/430°F) are prepared by:

(a) forming an aqueous slurry containing, on a dry solids weight percent basis: 1) 5 to 40 weight percent of a sodium zeolite Y characterized by a $Na_2O$ content of greater than 2 percent by weight and characterized by a unit cell parameter ($a_o$) greater than 24.50 and less than 24.66; 2) 5 to 40 percent by weight of an alumina; and 3) 40-90 percent by weight of at least one porous oxide matrix;

(b) spray drying;

(c) ammonium exchanging the spray dried product of step (b) to provide a product, on a dry basis, containing less than 1.2 weight percent $Na_2O$;

(d) calcining the product of step (c) at an effective temperature to provide a product characterized by a zeolite component characterized by a unit cell parameter less than 24.66 and greater than 24.55; and

(e) ammonium exchanging the product of step (d) under effective conditions to provide a product containing less than 0.8 weight percent $Na_2O$, based on the weight of the solid catalyst.

- 1 -

IMPROVED CRACKING CATALYST
AND METHOD OF MANUFACTURE

BACKGROUND OF THE INVENTION

FIELD OF THE INVENTION

This invention relates to a catalyst
composition, its method of manufacture and its use
in catalytic processes. More particularly, the
invention is concerned with a fluid cracking
catalyst which has markedly improved activity and
selectivity for producing gasoline fractions from
petroleum gas oil feedstocks.

DESCRIPTION OF THE PRIOR ART

Catalytic cracking of heavy petroleum
fractions is one of the major refining operations
employed in the conversion of crude petroleum oils
to usable fuel products, including gasoline. The
most common "fluid" catalytic conversion process is
fluid catalytic cracking (FCC) wherein preheated
high molecular weight hydrocarbon liquid feedstocks
and vapors are contacted with hot, finely-divided,
solid catalyst particles. FCC is typically
conducted either in a fluidized bed reactor or in an
elongated riser reactor. The liquid feedstock is
maintained at an elevated temperature in a fluidized
or dispersed state for a period of time sufficient
to effect the desired degree of cracking to lower
molecular weight hydrocarbons of the type suitable
for use as gasoline fractions.

Numerous petroleum cracking catalysts are
described in the literature and are commercially

15117

available for use in fluidized catalytic cracking processes. Commercially employed catalytic cracking catalysts generally comprise a crystalline aluminosilicate zeolite cracking component in combination with one or more inorganic oxide matrix components. Typical zeolites which have been combined with the inorganic oxide matrix include hydrogen and/or rare earth metal-exchanged synthetic faujasite of the X or Y-type. The matrix materials may include amorphous silica-alumina gels and/or clay materials such as, for example, kaolin.

Commercially useful catalytic cracking catalysts used for the production of gasoline must exhibit good activity and selectivity. The activity of a catalysts is generally referred to as the ability of the catalyst to convert heavy petroleum fractions to lower molecular weight fractions and, in particular to gasoline fractions. Under a set of fixed operating conditions, the degree to which the catalyst converts the feed to lower molecular weight fractions is a measure of the catalyst activity. Thus two or more catalysts can have their activities compared by the level of cracked products made by each catalyst under the same process conditions, e.g. conversion, catalyst to oil ratio, etc. The selectivity of a catalyst refers to the fraction of the cracked products in a particular boiling or molecular weight range; e.g., $C_5$/430°F naphtha, $C_3^-$ dry gas, carbon, etc. A more specific measure of selectivity of a catalyst process is the octane rating of the $C_5$/430°F fraction (commonly referred to as the "gasoline fraction"). It is desirable for

D-15117

0236548

a cracking catalyst to exhibit both high cracking activity, a high selectivity to gasoline fraction (boiling in the range of $C_5/430°F$) and be capable of producing products with high octane numbers, i.e., produce a gasoline fraction with the highest possible octane rating. Unfortunately, catalysts having the highest activity do not generally produce the highest octane gasoline fraction and vice versa. For example, the amorphous silica-alumina cracking catalysts used prior to the advent of the present day zeolite-containing cracking catalysts were less active than the present day zeolite cracking catalysts for cracking gas oil feedstock, i.e. were less selective in the yield of $C_5/430°F$ naphtha, but produced a higher octane number naphtha than conventional zeolite cracking catalysts. Further, many of the attempts to produce new catalysts have involved expensive components for the catalysts and, accordingly, have dramatically increased the cost of preparing cracking catalysts.

The individual starting components of the catalyst composition of this invention are generally described in the patent and non-patent literature. The specific combination and method of combining these components to economically produce a highly active and selective catalyst for the production of gasoline is not shown in the prior art.

U.S. Patent No. 3,312,615 describes a three component catalyst system comprising a crystalline aluminosilicate, substantially inert fines and an inorganic oxide matrix therefor. The crystalline aluminosilicate includes a wide variety of zeolites such as zeolites X, and Y, as well as naturally occurring zeolites including chabazite, faujasite, mordenite, and the like. The substantially inert fines include alpha-alumina, barytes, zircon, zirconia, kyanite, and rutile fines.

U.S. Patent No. 3,542,670 describes a cracking catalyst made by combining a silica-alumina hydrogel with a boehmite amorphous hydrous alumina, and a crystalline aluminosilicate having a pores in the 8 - 15A range and a silica-to-alumina mol ratio greater than 3:1. The crystalline aluminosilicate includes a variety of zeolites which are exchanged with various ions including hydrogen, and specific metals including rare earth metals.

U.S. Patent No. 3,816,342 is directed to a process for preparing a fluid catalytic cracking catalyst containing a highly active crystalline aluminosilicate and a relatively less active matrix material. The patentee claims the crystalline aluminosilicate materials having the general formula:

$$M_{2/n}O:Al_2O_3:YSiO_2:ZH_2O$$

in the salt form, wherein n is the valence of the metal cation, M, Y is the number of moles of silica, and "Z" is the number of water of hydration. Zeolites Y and X are described as being among the most suitable synthetic crystalline aluminosilicates. The matrix materials are described as inorganic oxide gels, such as those of silica-zirconia, alumina, magnesia, and combinations thereof with one another, clays, alumina, metals and refractory materials.

U.S. Patent No. 3,930,987 describes a cracking catalysts comprising a composite of crystalline aluminosilicates containing rare earth metal cation dispersed in an inorganic oxide matrix wherein at least 50 wt% of the inorganic oxide is silica and/or alumina. The matrix preferably is made up of silica-alumina, silica-zirconia or silica-zirconia alumina, desirably along with a weighting agent preferably clay and/or alumina. Alpha-alumina is preferred in the event an alumina is employed.

U.S Patent No. 3,717,587 describes the preparation of a cracking catalyst composition containing a wide variety of crystalline aluminosilicates dispersed in an inorganic oxide gel matrix containing a weighting agent. The patent specifies that the most preferred weighting agent is kaolin clay. Other suitable weighting agents include zirconia, alpha alumina, mullite, alumina monohydrate, alumina trihydrate, halloysite, sand, metals such as aluminum and titanium, etc.

U.S. Patent No. 3,788,977 relates to a cracking catalyst for increasing the amount of aromatic gasoline fractions from gas oil feedstocks. The cracking catalyst is described as a composition comprising a number of zeolite components in combination with minor amounts of a reforming-like additive which consists of uranium oxide and/or platinum metal impregnated upon an inorganic oxide support. The zeolites contemplated by patentee include hydrogen and/or rare earth metal exchanged synthetic faujasites which have silica to alumina ratios on the order of 2.5 up to about 6, including type X or Y faujasites. In addition to rare earth metal exchanged faujasites, patentee contemplates the use of low soda content zeolites.

U.S. Patent No. 4,259,212 discloses a cracking catalyst composition comprising discrete particles of ultra-stable Y zeolite and discrete particles of alumina, which particles are dispersed in a porous oxide matrix to produce a catalyst containing 5-40 wt. % ultra-stable Y zeolite, 5-40 wt. % alumina and 40-90 wt. % of porous oxide matrix. The catalyst composition is prepared by:

(1) forming an aqueous slurry mixture containing (a) a porous oxide, (b) particles of alumina, and (c) particles of ultra-stable Y zeolite;

(2) drying said mixture to form a catalyst composite comprising discrete particles of ultra-stable Y zeolite and discrete particles of alumina which are dispersed in a porous oxide matrix;

(3) washing said catalyst composite to remove extraneous salts soluble in an aqueous ammonium salt solution; and

(4) drying the washed catalyst composite to reduce the moisture content thereof below 15 wt.%.

U.S. Patent No. 4,259,212 employs as a critical component a zeolite denominated as "ultra-stable Y zeolite". The characterization of an ultra-stable Y zeolite is set forth beginning at column 3, line 25. The term "ultra-stable" is defined at column 3, lines 34 to 44 as follows:

> As used herein "ultra-stable" refers
> to a Y zeolite which is highly
> resistant to degredation of

crystallinity by high temperatures and
steam treatment and is characterized by an
$R_2O$ content (where R is Na, K, or any
other alkali metal ion) of less than about
4 weight %, preferably less than 1 weight
%, and a unit cell size less than about
24.50 Angstrom units (A) and an
$SiO_2/Al_2O_3$ mole ratio in the range of
3.5-7 or higher. In a preferred embodiment
of the invention, the unit cell size of the
ultra-stable Y zeolite will be less than
24.40A.

The importance of employing an ultra-stable Y
zeolite in formulating the catalyst of U.S. Patent
No. 4,259,212 is discussed in examples 9 and 10 of
the patent (column 11, line 44 to column 14, line
53). Catalyst N is disclosed to be a comparative
catalyst and was prepared using a sodium faujasite
(NaY) commercially available as LZ-Y52 from Union
Carbide Corporation. Catalyst N was prepared by
mixing LZ-Y52 with alumina in water to form a slurry
and adding this slurry to a slurry of impure
silica-alumina gel. The final aqueous slurry was
colloid milled, spray dried, reslurried in hot water
for 10 minutes, filtered and washed with water. The
water rinsed composite was dried and then calcined
at about 1000°F for six hours. Catalyst N was
evaluated in example 10 and compared with similarly
prepared Catalyst M (prepared according to the
invention of U.S. P. 4,259,212) wherein an
ultra-stable Y zeolite component was employed in
place of the NaY. The patentee states, at column
14, lines 49 to 53, that, "A comparison of catalyst
M with catalyst N shows that there is a significant catalytic activity decrease when the ultra-stable Y zeolite of this invention is replaced with Y-type faujasite zeolite."

The instant invention is to be contrasted with the above discussed catalysts. In particular, the instant catalyst is prepared using a sodium Y-type faujasite zeolite by a process that provides a catalyst having improved activity and high selectivity to gasoline products, even when compared to catalysts containing ultra-stable Y zeolites as disclosed in U.S. Patent No. 4,259,212. A more detailed description of the instant catalyst is set forth hereinafter.

SUMMARY OF THE INVENTION

A cracking catalyst is prepared which has improved activity and high selectivity for the conversion of hydrocarbon feedstocks to gasoline fractions. The cracking catalyst is prepared by:

(a) forming an aqueous slurry containing particles of effective size for use in fluid catalytic cracking, on a dry solids weight percent basis: 1) 5 to 40 weight percent of a sodium zeolite Y characterized by a $Na_2O$ content of greater than 2 percent by weight and characterized by a unit cell parameter ($a_o$) greater than 24.55 and less than 24.66; 2) 5 to 40 percent by weight of an alumina; and 3) 40-90 percent by weight of at least one porous oxide matrix;

(b) spray drying the aqueous slurry of part (a);

(c) ammonium exchanging the spray dried product of step (b) with an effective amount of an ammonium-containing solution under effective ion exchange conditions to provide a product, on a dry basis, containing less than 1.2 weight percent $Na_2O$;

(d) calcining the product of step (c) at an effective temperature for an effective period of time to provide a product characterized by a zeolite component having a unit cell parameter less than the zeolite Y of step (a) and greater than 24.55; and

(e) ammonium exchanging the product of step (d) under effective conditions to provide a product containing less than 0.8 weight percent $Na_2O$, based on the weight of the solid catalyst.

## DETAILED DESCRIPTION OF THE INVENTION

The instant invention relates to cracking catalyst prepared from non-stabilized Y-type faujasite zeolites, aluminas and at least one porous inorganic oxide matrix. These cracking catalysts are prepared by a novel process and the resulting catalysts are characterized by having improved activity and attrition resistance while also having selectivity to the gasoline fraction ($C_5$/430°F). The final catalyst is characterized by a zeolite component having a unit cell size greater than 24.55 Angstroms (A). This is to be contrasted with ultra-stable Y-type zeolites which have unit cell sizes less than 24.50 Angstrom units (e.g., see the discussion of U.S. Patent No. 4,259,212 in the "Description of the Prior Art"). The prior art has heretofore generally taught that cracking catalysts which exhibit high activity and generally do not provide good selectivity to the gasoline fraction ($C_5$/430°F) and that such gasoline selectivity is provided by catalysts which have zeolite Y components characterized by unit cell sizes less than 24.50 and are components of catalysts containing low alkali metal content, e.g., preferably considerably less than 1 weight percent. Further U.S. Patent No. 4,259,212 has taught that a catalyst containing a Y-type faujasite zeolite, alumina and a porous oxide matrix does not provide a catalyst characterized by high activity and gasoline selectivity unless the Y-type zeolite component is an ultra-stable Y-type zeolite. The instant invention relates to the preparation of cracking catalysts characterized by zeolite Y components that do not have the characteristic unit cell size of ultra-stable Y-type zeolites ($<$24.50) but which exhibit high activity and high selectivity to the $C_5$/430°F gasoline fraction.

The cracking catalysts of this invention are prepared by:

(a) forming an aqueous slurry containing particles of an effective size for use in fluid catalytic cracking , on a dry solids weight percent basis: 1) 5 to 40 weight percent of a sodium zeolite Y characterized by a $Na_2O$ content of greater than 2 percent by weight and characterized by a unit cell parameter ($a_o$) greater than 24.55 and less than 24.66 Angstroms; 2) 5 to 40 percent by weight of an alumina; and 3) 40-90 percent by weight of at least one porous oxide matrix;

(b)   spray drying the aqueous slurry of part (a);

(c)   ammonium exchanging the spray dried product of step (b) with an effective amount of an ammonium-containing solution under effective ion exchange conditions to provide a product, on a dry basis, containing less than 1.2 weight percent $Na_2O$ and preferably less than 1.2 weight percent $Na_2O$;

(d)   calcining the product of step (c) at an effective temperature for an effective period of time to provide a product characterized by a zeolite component characterized by a unit cell parameter less than the limit cell size of the zeolite Y of step (a), preferably less than 24.63A, and greater than 24.55A; and

(e)   ammonium exchanging the product of step (d) under effective conditions to provide a product containing less than 0.8 weight percent $Na_2O$, preferably less than 0.5 weight percent, the most preferred being less than 0.2 weight percent, based on the weight of the solid catalyst.

The Y-type zeolite component is selected as a sodium Y-type zeolite having a unit cell parameter (size) less than 24.66 Angstroms (A) and greater than 24.55A. It is important that the unit cell parameter of the Y-type zeolite be less than 24.66A, preferably less than or equal to 24.63A, if the final catalyst is to have the desired activity and selectivity required for commercial cracking catalysts. Several commercially available sodium or

sodium/$NH_4^+$ Y-type zeolites are characterized by unit cell sizes of 24.68 or greater. For example, Union Carbide Corporation's LZ-Y52 and LZ-Y62 zeolite powders have unit cell parameters of 24.68A and 24.73A respectively, and have a $SiO_2/Al_2O_3$ ratio of about 4.74. Such NaY-type zeolites are not generally employable herein if the desired activity and selectivity of the final catalyst is to be obtained. The preparation of sodium-type zeolites for use in the instant invention is known in the prior art. Such zeolites preferably have a $SiO_2/Al_2O_3$ ratio greater than about 5.2, and are preferably between about 5.2 and 5.9, contain 2-14 weight percent sodium as $Na_2O$ and have a unit cell size greater than 24.55 Angstroms. The preparation of such NaY-type zeolites is well known in the act. The Na/$NH_4^+$ form of zeolite Y may be prepared by ammonium exchange of the as synthesized NaY zeolite and such NaY zeolite typically contain 2 to 6 wt % $Na_2O$. In one embodiment the catalysts of the instant invention may be prepared in conjunction with the use of a LZ-Y52 and/or LZ-Y62 type zeolite when a slight decrease in activity and/or selectivity is economically justified.

The alumina component of the catalyst of the invention comprises particles of various aluminas which are generally known and, in many instances, commercially available. These aluminas include the anhydrous and/or the hydrated forms. A rather comprehensive description of aluminas is given in "Encyclopedia of Chemical Technology," Kirk-Othmer, Second Edition, Volume 2 (Interscience Publishers) at pages 41-55 which is incorporated herein by reference. It has been discovered that it is preferred to use an amorphous alumina if a highly active catalyst is desired whereas peptized aluminas provide more attrition resistant catalysts.

Among the aluminas useful in preparing the catalyst of this invention are aluminas having a total surface area (B.E.T. method - Brunauer, Emmett and Teller; The Van Nostrand Chemist's Dictionary (1953 Edition)) greater than 20 square meters per gram ($m^2$/g.), generally greater than 145 $m^2$/g., for example, 145-300 $m^2$/g. The pore volume (B.E.T. method) of the alumina will generally be greater than 0.35 cc/g. The average particle size of the alumina will generally be less than 10 microns, more preferably less than 3 microns. The alumina component may include aluminas which have been preformed and placed in a physical form such that its surface area and pore structure are wholly or partially stabilized so that when it is added to an impure inorganic gel containing considerable amounts of residual soluble salts, the salts will not alter the surface and pore characteristics measurably nor will they promote more than minimal chemical attack on the preformed alumina which could then undergo change. For example, the alumina component may have been formed by suitable chemical reaction, the slurry aged, filtered, dried, washed free of residual salts and then direct to reduce its volatile contents to less than about 25 wt. %.

An alumina can be made by reacting solutions of sodium aluminate and aluminum sulfate, under suitable conditions, aging the slurry to give the desired pore properties of the alumina, filtering, drying, reslurrying in water to remove sodium and sulfate ions and drying to reduce volatile matter content to less than 25 weight percent. The alumina may then be slurried in water and blended, in proper amount with the zeolite component.

In addition, the instant catalysts may be prepared by using hydrous slurries of diverse hydrated aluminas which may be a particular crystalline form, or amorphous, or mixtures. As above noted, the use of amorphous alumina tends to result in catalyst compositions having higher activity, although the attrition resistance of the catalyst may be less than that obtained by use of crystalline aluminas. These hydrates include alpha-monohydrate, alpha-trihydrate, beta-trihydrate, and to a lesser degree, beta-monohydrate forms of alumina. These are generally made from solutions of aluminum salts or of alkaline aluminates. Depending on reaction conditions, the product aluminas can have a wide range of physical properties. In addition to the foregoing, the alumina slurry can be a gel. Alumina gels generally have a dried solids content of about 2-12% by weight. On drying, the alumina gels lose water progressively and with increasing temperatures the first transition phase (non-hydrated) can be either eta- or gamma- alumina.

D-15117

The inorganic oxide which may be employed as a matrix in the catalyst composition of the invention may include any of the readily available porous materials such as alumina, silica, boria, chromia, magnesia, zirconia, titania, silica-alumina, and the like, and mixtures thereof. These materials may also include one or more of the various well known clays such as montmorillonite, kaolin, halloysite, bentonite, and the like. In one embodiment the use of alumina-$ZrO_2$ is advantageous in providing catalysts with improved thermal stability under catalytic cracking conditions. The inorganic oxide may also be one or more of the conventional siliceous varieties containing a major amount of silica and a minor amount of an oxide of at least one metal in Groups II-A, III-A and IV-B of the Periodic Table (Handbook of Chemistry and Physical, 38the Ed., 1957). Representative silica-containing matrix materials include silica-alumina, silica-magnesia, silica-zirconia, silica-thoria, silica-titania, silica-alumina-zirconia, silica-alumina-magnesia, etc. The preferred inorganic oxide matrix will be a kaolin clay and a silica sol. Silica sols may be prepared by using a sodium silicate and an acid, e.g., an acid alum, such as $Al_2(SO_4)_3$ and $H_2SO_4$ mixtures.

Amorphous silica-alumina gels may be employed as the inorganic oxide matrix. These materials are typically prepared from silica hydrogel or hydrosol, which is mixed with an alumina source, generally an aluminum salt solution, to secure the desired silica-alumina composition. The alumina content of the silica-alumina matrix will typically range from about 5 to 40 wt. % with the preferred composition having an alumina content of about 10 to 35 wt. %. Various procedures are described in the literature for making silica-alumina, e.g., U.S. Patent Nos. 2,908,635 and 2,844,523.

The final catalyst composition of the invention will comprise 5-40 wt. %, preferably 10-30 wt. %, of the NaY zeolite component; 5-40 wt. %, preferably 10-30 wt. %, of the alumina component; and 40-90 wt. %, preferably 50-80 wt.%, of the inorganic oxide matrix component. It is also within the scope of this invention to incorporate in the catalyst other materials commonly unemployed in cracking catalysts, including other various zeolites, clays, metal CO oxidation promoters, rare earth cations, etc.

The catalysts of the present invention may be prepared in accordance with well known techniques. For example, a preferred method of preparing a catalyst of the invention is to prepare two solid slurries. One aqueous slurry containing the sodium zeolite Y and alumina and the second aqueous slurry containing the inorganic oxide matrix components. The two aqueous slurries are then mixed to form a single catalyst slurry which is milled and spray dried to form a product. The slurry is effectively treated prior to spray drying, e.g., milled, to provide particles of a size suitable for catalytic cracking, e.g., at least 90 wt. % of the particles less than 3 microns in diameter. The spray dried product is ammonium exchanged, calcined and further ammonium exchanged to provide the final cracking catalyst of this invention.

Intermediate drying steps may be included after each step to facilitate handling of the catalyst composition. Such drying steps are generally carried out at relatively low temperatures between about 100°C and about 150°C for periods between about 0.1 hour to several hours.

The ammonium exchange in steps (d) and (f) may be carried out one or more times using ion-exchange procedures well known in the art. The ammonium exchange is generally carried out with an aqueous solution containing 5-15 weight percent of an ammonium salt. The ammonium salt may be any water soluble ammonium salt including ammonium sulfate, ammonium nitrate, ammonium carboxylates and the like. In one embodiment a portion of the ammonium salt may be replaced by one or more rare earth salts. The use of a rare earth salt in conjunction with the ammonium salt is preferably employed in step (f) and not step (d).

The calcination step is carried out at an effective temperature to provide a product having a zeolite component characterized by a unit cell size less than the unit cell size of the starting NaY and greater than 24.55A. The calcination temperature is desirably carried out at a temperature greater than 1000°F and preferably at a temperature greater than 1200°F. The temperature is preferably less than 1450°F and more preferred below 1400°F. The calcination is preferably carried out in the presence of an effective amount of steam. The steam may be added during the calcination step or may be generated *in situ* from water present on the catalysts composition prior to calcination. For example, the catalyst composition prior to calcination may contain residual water in an amount up to 30 percent by weight (30 LOI). The catalyst composition typically contains 5 to 20 weight percent water. This water will be converted to steam under effective calcination conditions. Steam may be added during the calcination step and may be added in an amount between about 0.01 pound to about 1 pound of steam per pound of catalyst, preferably between about 0.1 and about 0.5 pound of steam per pound of catalyst. As aforementioned, the calcination with or without the presence of steam is carried out at an effective temperature and for an effective period of time to provide a catalyst with a zeolite component characterized by a unit cell size ($a_o$) less than that of the starting NaY zeolite and greater than 24.55A. The $a_o$ of the zeolite component after calcination is preferably between 24.58A and 24.63A.

The feedstock suitable for conversion in accordance with the invention include any of the well known feedstocks conventionally employed in catalytic cracking processes. Usually, they will be petroleum derived, although other sources such as shale oil, tar sands oil, and coal are not to be excluded. Typical of such feeds are heavy and light virgin gas oils, heavy and light virgin naphthas, solvent extracted gas oils, coker gas oils, steam-cracked gas oils, cycle oils, residual, deasphalted residua, hydrotreated residua, topped crudes, etc., and mixtures thereof.

The catalyst of the invention may be employed for the catalytic cracking of the aforementioned feedstocks in accordance with well known techniques. In general, the cracking conditions will include a temperature in the range of about 850°F to 1,050°F, a pressure of 0 to 50 psig. and a feed rate of 1 to 20 W/Hr/W. The catalyst may be regenerated at conditions which include temperatures in the range of 1,100°F to 1,500°F, preferably 1,175°F to 1,350°F.

The following examples are provided to illustrate the invention and are not intended to be limiting thereof:

### EXAMPLE I

A NaY zeolite possessing a unit cell size of 24.65°A
(ASTM D 3942-80) was mixed in proportions with an amorphous alumina (tradename CP-5; ALCOA) and water such that the resultant slurry contained 27.7% wt solids expressd on a $SiO_2$-$Al_2O_3$
($Na_2O$ free) basis and the NaY zeolite accounted for 77.8% wt of those solids. The zeolite-alumina slurry so formed was placed in a batch process grinding mill (using sand as the milling media) for five minutes in quantities such that the ratio of dry sand to the $SiO_2$-$Al_2O_3$ solids content of the slurry was 4/1 wt/wt. These conditions are known to reduce the particle size of the solids contained in the slurry to substantially below four microns and preferably to 1-2 microns. The milled slurry is hereinafter referred to as Component A.

A sodium silicate (N-Brand, PQ Corporation 28.5% $SiO_2$, 8.8% $Na_2O$) solution was mixed in proportions with water to give a dilute sodium silicate solution which contained 12.5% wt $SiO_2$. Separately an acid-alum solution was prepared by dissolving 41.1 lbs. of $Al_2(SO_4)_3$ · $16H_2O$(FW=630) in 165.4 lbs. of $H_2O$ and then adding 26.8 lbs. of concentrated sulfuric acid (98%). These solutions were allowed to equilibrate to ambient temperature and were mixed in proportions to give a sol composition with a pH = 2.6-2.8 and a $SiO_2$-$Al_2O_3$ solids ($Na_2O$, $SO_4$ free) content of 10.0%. The resulting sol is hereinafter referred to as Component B.

A clay slurry (RC-32, Thiele Kaolin Co.) was analyzed to contain 61% wt solids and is hereinafter referred to as Component C.

A slurry was prepared by mixing 200 parts by weight of Component B with 58 parts by weight of Component C and then adding 162 parts by weight of Component A. The resulting slurry was spray dried at 630°F inlet temperature, 320°F outlet temperature using rotary wheel atomization. Based on the pre-spray dryer slurry composition the spray dried product contained on a $SiO_2$-$Al_2O_3$ basis: 35% NaY, 10% amorphous alumina, 35% clay and 20% sol binder.

The spray dried product was slurried in water and filtered. An exchange solution containing 100 parts by weight $(NH_4)_2SO_4$ dissolved in 1000 parts by weight water was heated to 140°F. The pH of the exchange solution was adjusted to 7.0-7.5 by addition of concentrated $NH_4OH$. This exchange solution was poured over the filter cake in quantities such that a total of 0.585 parts by weight $(NH_4)_2SO_4$ per part spray dried product ($SiO_2$-$Al_2O_3$ basis) was used. The filter cake was then washed with 6 parts by weight water at 140°F per part spray dried product ($SiO_2$-$Al_2O_3$ basis) and subsequently dried overnight at 250°F.

The dried product was calcined in an indirectly heated rotary calciner at conditions which gave an approximately 1150°F product temperature and a total residence time of one hour. The calcined product was slurried in water, filtered and exchanged with the ammonium sulfate solution previously described such that 0.19 parts by weight $(NH_4)_2SO_4$ were used per part calcined product ($SiO_2$-$Al_2O_3$ basis). The filter cake was washed with 4 parts by weight water at 140°F per part calcined product and then subsequently dried overnight at 250°F to produce a finished catalyst product which was denominated Catalyst B.

## EXAMPLE II

a. A comparative spray dried catalyst was prepared by a procedure similar to Example I, except that instead of NaY zeolite an LZY-82 (available from Union Carbide Corporation and denominated in U.S. p. 4, 259, 212 as an "ultra-stable zeolite Y") was mixed in proportions with the amorphous alumina such that the USY accounted for 75.0% wt of the slurry solids. The resultant slurry was milled in a continuous process grinding mill, using sand as the grinding media, at a rate and conditions such that the ratio of dry sand to the $SiO_2$-$Al_2O_3$ solids content of the slurry was 2/1 wt/wt and the average residence time of the slurry particles was approximately 20 minutes. These conditions are known to produce a similar particle size reduction to those used in Example I. The resultant slurry is hereinafter referred to as Component D.

A slurry was prepared by mixing Component D with Components B and C/of Example I such that the total slurry on a dry $SiO_2$-$Al_2O_3$ basis contained: 30% USY, 10% amorphous alumina, 40% clay and 20% sol binder. The slurry was spray dried using rotary wheel atomization, an inlet temperature of 770°F and an outlet temperature of 270°F.

The spray dried product was reslurried in water, filtered, exchanged with a 140°F, 10% $(NH_4)_2SO_4$ solution such that 0.15 parts $(NH_4)_2SO_4$ per part spray dried catalyst (dry $SiO_2$-$Al_2O_3$ basis) were used on a weight basis. The exchanged catalyst was hot water (140°F) washed substantially free of sulfate ion and dried at 260°F. It was then calcined at 550°F and subsequently exchanged with a 140°F, 10% $(NH_4)_2SO_4$ solution such that 0.09 parts $(NH_4)_2SO_4$ per part calcined catalyst (dry $SiO_2$-$Al_2O_3$ basis) were used on a weight basis. The resulting catalyst particles were hot water washed substantially free of sulfate ions and dried at 260°F to produce a finished catalyst particle. This catalyst was denominated Catalyst A.

(b) The catalysts prepared in Examples I and II were evaluated as catalysts for fluid catalytic cracking in a pilot plant unit (isothermal lean phase folded riser reactor of the type described by W. H. Hunes in "Chemical Engineering Progress", pages 51-54 February, 1983) and were denominated as Catalyst B and Catalyst A, respectively in Examples I and II. Each catalyst was evaluated at comparable conversions. The higher activity of Catalyst B, prepared according to this invention, as compared to Catalyst A required the use of a higher catalyst to oil ratio for Catalyst A to achieve a conversion comparable to Catalyst B as similar process temperatures. Catalysts A and B were steamed at 1350°F in 100% atmospheric steam for 14 hours to simulate the environment experienced by fluid catalytic cracking catalysts during commercial operation. The steamed catalysts had the following physical and chemical properties:

|  | Catalyst A | Catalyst B |
|---|---|---|
| $Na_2O$, wt. % | 0.11 | 0.57 |
| $Re_2O_3$, wt. % | 0.17 | 0.05 |
| Surface Area (SA), $M^2/g$ | 240 | 235 |
| SA after steaming, $M^2/g$ | 166 | 152 |
| Cell Size A° | 24.54 | 24.60 |

- 24 -

Catalysts A and B were evaluated for fluid catalytic cracking of a feedstock having the following properties:

| | |
|---|---|
| Gravity, ° API (60°F) | 22.4 |
| Molecular Weight (Average) | 375 |
| Conradson Carbon Residue, wt. T | 0.58 |
| Vanadium, wppm | 1 |
| Nickel, wppm | 1 |
| Iron, wppm | 5 |
| Nitrogen, wt. % | 0.21 |
| Basic Nitrogen, wt. % | 0.066 |
| Sulfur, wt. % | 0.74 |
| Saturates, % | 47.4 |
| Aromatics, % | 44.8 |
| Polars, % | 7.8 |

.G. C. Simulated Boiling Point Distribution:

| | |
|---|---|
| IBP at 760 MM | 494° F |
| 10% | 637 |
| 30% | 734 |
| 50% | 807 |
| 70% | 884 |
| 90% | 980 |

The pilot plant evaluation of catalysts A and B gave the following results:

| | Catalyst A | Catalyst B |
|---|---|---|
| OPERATING CONDITIONS: | | |
| Reactor Temp (°F) | 974 | 970 |
| Regenerator Temp. (°F) | 1282 | 1281 |
| Cat./Oil Ratio (WT.) | 10.1 | 7.0 |
| CONVERSION: Vol (%): | 71.3 | 70.7 |

|                                     | Catalyst A | Catalyst B |
| ----------------------------------- | ---------- | ---------- |
| **PRODUCT YIELDS: (Vol. %)**        |            |            |
| Total C3's                          | 11.9       | 10.9       |
| C3=                                 | 10.5       | 9.5        |
| Total C4's                          | 17.8       | 17.0       |
| iC4                                 | 3.9        | 4.3        |
| C4='s                               | 13.3       | 12.1       |
| $C_5$-430F Gasoline                 | 54.3       | 56.3       |
| 430F+                               | 28.7       | 29.3       |
| total $C_3$+Liquid                  | 112.7      | 113.5      |
| **PRODUCT YIELDS: (Wt. %):**        |            |            |
| $C_2$ and Lighter                   | 2.5        | 2.1        |
| Hydrogen                            | 0.07       | 0.05       |
| Coke                                | 3.3        | 2.7        |
| **GASOLINE BLEND STOCK:**           |            |            |
| $C_3/C_4$ Alkylate: Vol. % ($C_5$430+ Alkylate)[1] | 96.4 | 94.5 |
| **GASOLINE PRODUCT INSPECTIONS:**   |            |            |
| Density: g/cc                       | 0.7539     | 0.7499     |
| RON:clear[2]                        | 94.1       | 93.5       |
| MON:clear[2]                        | 83.0       | 81.5       |

[1] $C_5$-430°F + gasoline product that can be made with C3 and C4 olefins by reaction with isobutene.

[2] Adjusted for reactor temperature variations to 970°F.

The above product analyses indicates Catalyst B was more active than Catalyst A. Catalyst B achieved a conversion (70.7) similar to that of Catalyst A (71.3) at a similar temperature with a catalyst to oil ratio of only 7.0, as compared to 10.1 for Catalyst A. This significantly higher activity for Catalyst B will provide a catalyst having a higher equilibrium catalyst activity and result in longer catalyst life. The

The above product analyses indicates Catalyst B was more active than Catalyst A. Catalyst B achieved a conversion (70.7) similar to that of Catalyst A (71.3) at a similar temperature with a catalyst to oil ratio of only 7.0, as compared to 10.1 for Catalyst A. This significantly higher activity for Catalyst B will provide a catalyst having a higher equilibrium catalyst activity and result in longer catalyst life. The activity of Catalyst B is not accompanied by an increase in the weight percent coke formed by the catalyst. In fact, the weight percent coke was observed to be lower for Catalyst B than for Catalyst A, indicating the presence of more liquid products.

### EXAMPLE III

A NaY zeolite possessing a unit cell size of 24.63 A (ASTM D 3942-80) was mixed in proportions with an amorphous alumina (tradename SCP-350; Rhone-Poulenc Inc.) and water such that the resultant slurry contained 26.6% wt solids expressed on a $SiO_2$-$Al_2O_3$ ($Na_2O$ free) basis and the NaY zeolite accounted for 77.8% wt of those solids. The zeolite-alumina slurry so formed was pumped to a continuous process grinding mill (using sand as the milling media) at a rate and under conditions such that the ratio of dry sand to the $SiO_2$-$Al_2O_3$ solids content of the slurry was 2/1 wt/wt and the average residence time of the particles was approximately 20 minutes. The milled slurry is hereinafter referred to as Component E.

A spray dryer feed slurry was prepared by mixing Component E with Components B and C of Example I such that the slurry contained on a dry $SiO_2$-$Al_2O_3$ basis: 35% NaY, 10% amorphous $Al_2O_3$, 40% clay, and 20% sol binder. The slurry was spray dried using rotary wheel atomization at 650°F inlet temperature and 350°F outlet temperature.

The spray dried product was reslurried in water, filtered, and exchanged with 0.62 parts by weight of $(NH_4)_2SO_4$ (as a 9% solution at 130°F) per part by weight $(SiO_2$-$Al_2O_3$ dry basis) of spray dried product. It was then washed with 8 parts by weight water (130°F) and dried at 400°F. The dried catalyst, containing 12% moisture, was calcined at 1000°F for 3 hours in a muffle furnace. The calcined material was reslurried in water, further exchanged with 0.21 parts by weight $(NH_4)_2SO_4$ as a 9% solution at 130°F and washed with 8 parts by weight water (130°F). The surface area of the catalyst was 266 square meters per gram ($m^2$/g). This catalyst was evaluated by a microactivity test (MAT) as identified in ASTM D 3907-80 Test Method on a series of samples which were pretreated by calcination or steam calcination as shown in Table I.

TABLE I (Ex. 3)

| | Calc 850°C/218 hrs | 100% Steam 730°C/4 hrs | 100% Steam 770°C/hrs | 100% Steam 790°C/4 hrs | 100% Steam 815°C/4 hr |
|---|---|---|---|---|---|
| S.A., $M^2$/gm | 239 | 195 | 182 | 173 | 148 |
| **MAT Yields, % wt.** | | | | | |
| Conv. | 90.9 | 83.9 | 78.7 | 75.6 | 67.7 |
| $H_2$ | .12 | .05 | .06 | .04 | .06 |
| $C_1$ & $C_2$ | 1.99 | 1.61 | 1.12 | 1.04 | .77 |
| $C_3$ | 3.01 | 2.43 | 1.21 | .89 | .52 |
| $C_3$ = | 2.80 | 3.15 | 3.6 | 3.69 | 3.49 |
| $I-C_4$ | 7.89 | 7.66 | 6.08 | 5.29 | 3.97 |
| $TC_4$'s | 12.3 | 11.9 | 10.4 | 9.9 | 8.7 |
| $TC_4$'s = | 1.8 | 2.2 | 3.2 | 3.8 | 4.3 |
| Gasoline | 58.5 | 60.4 | 59.8 | 58.1 | 52.6 |
| LCO | 8.6 | 12.9 | 16.7 | 18.5 | 23.2 |
| HCO | 0.51 | 3.21 | 4.7 | 5.9 | 9.2 |
| Gasoline & Distillate | 67.1 | 73.3 | 76.5 | 76.6 | 75.8 |
| Coke | 8.52 | 4.43 | 2.52 | 2.02 | 1.52 |
| ACTIVITY[1] | 9.99 | 5.21 | 3.69 | 3.10 | 2.10 |

[1](Conv/100-Conv)x100, Weight Basis

## EXAMPLE IV

A catalyst containing LZY-82, (available from Union Carbide Corporation) was prepared in a manner identical to Example II except that spray drying occurred at 650°F inlet temperature and 350°F outlet temperature.

After spray drying the catlayst was slurried in water, filtered and exchanged with 0.40 parts by weight $(NH_4)_2$ $SO_4$ (as a 140°F solution containing 9% $(NH_4)_2$ $SO_4$) per part weight of spray dried product (dry $SiO_2$-$Al_2O_3$ basis). It was then washed with 6 parts by weight hot water (140°F) and finally dried at 250°F. This catalyst had a surface area of 238 square meters per gram. The comparative catalyst was evaluated by the MAT test employed in example 3 and as set forth in Table II. A comparison of Tales I and II demonstrates the improvement in activity and decrease in coke formation provided by the catalyst of example 2.

## TABLE II (Ex. 4)

|  | Calc 850°C/218 hrs | 100% Steam 730°C/4 hrs | 100% Steam 770°C/hrs | 100% Steam 790°C/4 hrs | 100% Steam 815°C/4 hrs |
|---|---|---|---|---|---|
| S.A., $M^2/gm$ | 198 | 186 | 173 | 167 | 156 |
| **MAT Yields, % wt.** | | | | | |
| Conv | 87.5 | 84.3 | 77.4 | 73.6 | 65.9 |
| $H_2$ | .07 | .09 | .07 | .06 | .05 |
| $C_1$ & $C_2$ | 2.06 | 1.58 | 1.10 | 1.04 | 0.83 |
| $C_3$ | 3.16 | 2.37 | 1.15 | .83 | .52 |
| $C_3 =$ | 2.97 | 3.18 | 3.61 | 3.76 | 3.17 |
| $I-C_4$ | 7.94 | 7.57 | 5.95 | 5.13 | 3.70 |
| $TC_4$'s | 12.3 | 11.8 | 10.4 | 9.9 | 8.3 |
| $TC_4$'s = | 1.9 | 2.3 | 3.4 | 4.0 | 4.1 |
| Gasoline | 61.1 | 61.1 | 58.5 | 55.9 | 51.4 |
| LCO | 10.5 | 12.7 | 17.5 | 19.7 | 23.5 |
| HCO | 2.0 | 3.0 | 5.1 | 6.7 | 10.5 |
| Gasoline & Distillate | 71.6 | 73.8 | 76.0 | 75.6 | 74.9 |
| Coke | 5.83 | 4.26 | 2.65 | 2.16 | 1.62 |
| ACTIVITY[1] | 7.0 | 5.37 | 3.42 | 2.79 | 1.93 |

[1](Conv/100-Conv) x 100, Weight basis

## EXAMPLE V

A catalyst containing a NaY zeolite with a 24.65°A cell size was prepared according to the procedure outlined in Example I except that the amorphous alumina used was SCP-350 (Rhone-Poulenc Inc.) and the spray drying conditions were 650°F inlet temperature and 350°F outlet temperature.

After spray drying, the catalyst was reslurried in water, filtered and exchanged with 0.50 parts by weight of $(NH_4)_2 SO_4$ (as a 9% solution at 120°F) per part by weight of spray dried product (dry $SiO_2$-$Al_2O_3$ basis). It was then given an additional exchange of 0.20 parts by weight of $(NH_4)_2 SO_4$ (as a 9% solution at 190°F) and water washed substantially free of sulfate ions. The exchanged catalyst was dried at 250°F and calcined at 1200°F for 3 hours in a muffle furnace. After calcination it was exchanged in a solution containing 0.20 parts by weight of $(NH_4)_2 SO_4$ (as a 9% solution at 190°F) for fifteen minutes, filtered and hot water (120°F) washed with 8 parts by weight water and finally dried at 250°F. The evaluation of this catalyst is set forth in Tables III and IV.

## EXAMPLE VI

A catalyst containing NaY zeolite with a 24.65 A cell size was prepared according to the procedure of Example V.

After spray drying, the catalyst was reslurried in water, filtered and exchanged with 0.585 parts by weight $(NH_4)_2 SO_4$ (as a 9% $(NH_4)_2 SO_4$, 130°F solution) per part by weight spray dried

product (dry $SiO_2$-$Al_2O_3$ basis). It was washed
with 6 parts by weight 130°F water and dried at
170°F to give a material containing 20% moisture.
The dried material was calcined in an indirect fired
rotary calciner at 1200°F maximum product
temperature with a one hour total residence time.

After calcination, it was reslurried in water,
filtered, exchanged with 0.13 parts by weight
$(NH_4)_2SO_4$ (as a 9% $(NH_4)_2SO_4$, 130°F
solution), washed with 8 parts by weight 130°F water
and finally dried at 250°F. The evaluation of this
catalyst is set forth in Tables III and IV.

TABLE III

| | EXAMPLE III | EXAMPLE IV | EXAMPLE V | EXAMPLE VI | EXAMPLE VII |
|---|---|---|---|---|---|
| $Na_2O$, % wt. | 0.49[1] | 0.09 | 0.47 | 0.42[1] | 0.55 |
| $RE_2O_3$, % wt. | 0.04 | 0.06 | 0.02 | 0.02 | 0.04 |
| SA, $M^2/gm$ | 266 | 238 | 274 | 258 | 233 |
| Cell Size, A | 24.58 | 24.51 | 24.62 | 24.61 | 24.59 |

[1] The actual $Na_2O$ contents is believed to be from .1 to .2 weight percent higher than reported by the analytical test employed for these examples.

TABLE IV[1]

|  | EXAMPLE I | EXAMPLE III | EXAMPLE IV | EXAMPLE V | EXAMPLE VI | EXAMPLE |
|---|---|---|---|---|---|---|
| **1400°F/5 hrs/100% Steam** | | | | | | |
| Conversion, % wt. | 77.3 | 78.5 | 74.3 | 77.8 | 75.9 | 78.7 |
| Gasoline, % wt. | 60.4 | 60.6 | 57.1 | 59.4 | 58.4 | 60.5 |
| Total $C_4$'s, % wt. | 9.3 | *2 | 9.5 | 10.0 | 9.3 | 9.7 |
| Total $C_3$'s, % wt. | 4.5 | *2 | 4.5 | 4.7 | 4.4 | 4.7 |
| $C_1+C_2$'s, % wt. | 0.9 | *2 | 1.1 | 1.1 | 1.0 | 1.2 |
| Coke, % wt. | 2.1 | 2.2 | 2.2 | 2.5 | 2.5 | 2.6 |
| LCO, % wt. | 17.2 | 16.9 | 19.1 | 16.5 | 17.9 | 16.9 |
| $C_4$=/TOTAL C4's | 0.37 | 0.35 | 0.38 | 0.33 | 0.34 | 0.29 |
| $C_3$=/TOTAL C3's | 0.81 | 0.78 | 0.81 | 0.77 | 0.77 | 0.74 |
| **1500°F/5hr/100% Steam** | | | | | | |
| Conversion, % wt. | 63.5 | 64.1 | 62.6 | 65.5 | 65.1 | 66.0 |
| Gasoline, % wt. | 50.9 | 51.4 | 49.7 | 52.3 | 52.5 | 52.6 |
| Total $C_4$'s, % wt. | 6.9 | *2 | 7.4 | 7.6 | 7.2 | 7.7 |
| Total $C_3$'s, % wt. | 3.4 | *2 | 3.5 | 3.5 | 3.4 | 3.6 |
| $C_1+C_2$s, % wt. | 0.6 | *2 | 0.7 | 0.7 | 0.7 | 0.7 |
| Coke, % wt. | 1.6 | 1.2 | 1.3 | 1.4 | 1.3 | 1.3 |
| LCO, % wt. | 24.5 | 24.7 | 25.4 | 24.0 | 23.6 | 23.7 |
| $C_4$=/TOTAL $C_4$'s | 0.49 | 0.55 | 0.56 | 0.53 | 0.52 | 0.49 |
| $C_3$=/TOTAL $C_3$'s | 0.88 | 0.89 | 0.88 | 0.88 | 0.87 | 0.87 |

*1 MAT (ASTM D 3907-80) on catalysts from indicated examples after such were deactivated in 100% steam at 1400°F or 1500°F for five hours.

*2 Not measured

EXAMPLE VII

A catalyst containing NaY with 24.65°A cell size was prepared according to the procedure of Example V.

After spray drying, it was reslurried in water, exchanged with 0.56 parts by weight $(NH_4)_2 SO_4$ (as a 9% $(NH_4)_2 SO_4$, 130°F solution) per part by weight spray dried product (dry $SiO_2$-$Al_2O_3$ basis), washed with 8 parts by weight 130°F water and dried at 250°F. The dried material was calcined in an indirect fired rotary calciner at 1200 F into which 0.20 parts by weight water per part catalyst were injected. Total average calciner residence time was one hour.

After calcination, the material was reslurried in water, exchanged with 0.20 parts by weight $(NH_4)_2 SO_4$ (as a 9% $(NH_4)_2 SO_4$, 130°F solution ), washed with 6 parts by weight 130°F water and finally dried at 250°F. The evaluation of this catalyst is set forth in TAbles III and IV.

EXAMPLE VIII

A catalyst containing NaY with a cell size of 24.65°A was prepared according to the procedures outlined in Example I, except that the milling of the zeolite-alumina slurry was conducted in a continuous process grinding mill (using sand as a milling media) at conditions such that a 2/1 wt/wt ratio of sand to dry $SiO_2$-$Al_2O_3$ basis solids content of the slurry and an average residence time of 20 minutes were maintained.

The spray dried product was slurried in water, exchanged with 0.57 parts by weight $(NH_4)_2 SO_4$

(as a 9% $(NH_4)_2$ $SO_4$, 130°F solution) per part
spray dried product (dry $SiO_2$-$Al_2O_3$ basis),
washed with 11 parts by weight 130°F water and dried
at 250°F.

### EXAMPLE IX

An aliquot of Example VIII was calcined in an
indirect fired rotary calciner at 1000°F maximum
product temperature and a total residence time of
one hour.

The calcined material was reslurried in water,
exchanged with 0.20 parts by weight $(NH_4)_2$ $SO_4$
(as a 9% $(NH_4)_2$ $SO_4$, 130°F solution) per part
by weight calcined product, washed with 8 parts by
weight 130°F water and finally dried at 250°F. This
catalyst and the catalysts prepared in Examples X to
XIII were evaluated and the results set forth in
Table V.

### EXAMPLE X

An aliquot of Example VIII was calcined in an
indirect fired rotary calciner at 1000-1050°F
maximum product temperature and a total residence
time of one hour.

The calcined material was reslurried in water,
exchanged with 0.20 parts by weight $(NH_4)_2$ $SO_4$
(as a 9% $(NH_4)_2$ $SO_4$, 130°F solution) per part
by weight calcined product, washed with 8 parts by
weight 130°F water and finally dried at 250°F.

### EXAMPLE XI

An aliquot of Example VIII was calcined in
an indirect fired rotary calciner at 1050-1250°F
maximum product temperature and a total residence
time of one hour.

The calcined material was reslurried in water, exchanged with 0.20 parts by weight $(NH_4)_2SO_4$ (as a 9% $(NH_4)_2SO_4$, 130°F solution) per part by weight calcined product, washed with 8 parts by weight 130°F water and finally dried at 250°F.

### EXAMPLE XII

An aliquot of Example VIII was calcined in an indirect fired rotary calciner at 1250-1400°F maximum product temperature and a total residence time of one hour.

The calcined material was reslurried in water, exchanged with 0.20 parts by weight $(NH_4)_2SO_4$ (as a 9% $(NH_4)_2SO_4$, 130°F solution) per part by weight calcined product, washed with 8 parts by weight 130°F water and finally dried at 250°F.

### EXAMPLE XIII

An aliquot of Example VIII was calcined in an indirect fired rotary calciner at 1450°F maximum product temperature and a total residence time of one hour.

The calcined material was reslurried in water, exchanged with 0.20 parts by weight $(NH_4)_2SO_4$ (as a 9% $(NH_4)_2SO_4$, 130°F solution) per part by weight calcined product, washed with 8 parts by weight 130°F water and finally dried at 250°F.

TABLE V (Ex. 9-13)

| Example | Calc'n Temp (°F) | Unit Cell, A | Surface Area, $M^2/gm$ | | | Final $Na_2O$, % |
|---|---|---|---|---|---|---|
| | | | Before Calcn. | After Calcn. | Final | |
| Example IX | 1000 | 24.63 | 278 | 254 | 258 | 0.57 |
| Example X | 1000-1050 | 24.60 | 278 | 248 | 241 | 0.50 |
| Example XI | 1050-1250 | 24.59 | 278 | 249 | 241 | 0.49 |
| Example XII | 1250-1400 | 24.58 | 278 | 241 | 232 | 0.46 |
| Example XIII | 1450+ | 24.38 | 278 | 204 | 164 | 1.10 |

## EXAMPLE XIV

A NaY possessing a unit cell size of 24.63 A was mixed in proportions with an amorphous alumina (tradename CP-5, ALCOA) and water such that the resultant slurry contained 29% wt solids expressed on a $SiO_2$-$Al_2O_3$ basis ($Na_2O$ free) and the NaY accounted 70.6% wt of those solids. The zeolite-alumina slurry so formed was placed in a batch process grinding mill (using sand as the grinding media) for five minutes such tht the ratio of dry sand to the $SiO_2$-$Al_2O_3$ solids content of the slurry was 4/1 wt/wt.

The milled zeolite-alumina slurry was combined with Components B and C of Example I in proportions such that on a dry $SiO_2$-$Al_2O_3$ basis the total slurry contained: 24% NaY, 10% $Al_2O_3$, 46% clay and 20% sol binder.

The slurry was spray dried using rotary wheel atomization at 550°F inlet temperature and 250°F outlet temperature.

The spray dried product was slurried in water, exchanged with 0.40 parts by weight $(NH_4)_2 SO_4$ (as a 9% $(NH_4)_2 SO_4$, 130°F solution), washed 6 parts by weight 130°F water and dried at 250°F.

The dried catalyst was calcined at 1400°F for 3 hours in a muffle furnace. After calcination, the sample was reslurried in water, exchanged with 0.27 parts $(NH_4)_2 SO_4$ (as a 9% $(NH_4)_2 SO_4$, 130°F solution), washed with 4 parts 130°F water, and finally dried at 250°F.

## EXAMPLE XV

A NaY possessing a unit cell size of 24.69 A was mixed in proportions with an amorphous alumina (tradename CP-5, ALCOA) and water such that the resultant slurry contained 27% wt solids expressed on a $SiO_2$-$Al_2O_3$ basis ($Na_2O$ free) and the NaY accounted 68.2% wt of those solids. The zeolite-alumina slurry so formed was placed in a batch process grinding mill (using sand as the grinding media) for five minutes such that the ratio of dry sand to the $SiO_2$-$Al_2O_3$ solids content of the slurry was 4/1 wt/wt.

The milled zeolite-alumina slurry was combined with Components B and C of Example I in proportions such that on a dry $SiO_2$-$Al_2O_3$ basis the total slurry contained: 24% NaY, 11% $Al_2O_3$, 45% clay and 20% sol binder.

This slurry was then spray dried and subsequently processed under the same conditions as outlined in Example XIV.

The catalysts prepared in Examples XIV and XV were evaluated for fluid catalytic cracking according to ASTM D 3907-80 and the results are reported in Table VI for catalysts tested after two different steam deactivation treatments. The results demonstrate that the catalyst prepared from a NaY zeolite having a unit cell size of 24.69 A was less active and less selective to gasoline products than the catalyst of Example XIV prepared using a NaY zeolite having a unit cell size of 24.63 A.

## TABLE VI[1]

### 1400°F/5 hr/100% steam

| | | |
|---|---|---|
| Conversion, % wt. | 77.6 | 74.2 |
| Gasoline, % wt. | 61.1 | 56.9 |
| Total $C_4$'s, % wt. | 9.3 | 9.4 |
| Total $C_3$'s, % wt. | 3.5 | 4.3 |
| $C_1$&$C_2$'s, % wt. | 0.9 | 1.0 |
| Coke, % wt. | 2.1 | 2.5 |
| LCO, % wt. | 17.3 | 18.8 |
| $C_4=$/TOTAL C4's, %wt. | 0.38 | 0.35 |
| $C_3=$/TOTAL C3's, % wt. | 0.80 | 0.78 |

### 1500°F/5 hr/100% steam

| | | |
|---|---|---|
| Conversion, % wt. | 64.1 | 57.1 |
| Gasoline, % wt. | 50.8 | 46.4 |
| Total $C_4$'s, % wt. | 7.7 | 6.7 |
| Total $C_3$'s, % wt. | 3.4 | 2.8 |
| $C_1$&$C_2$'s, % wt. | 0.7 | 0.6 |
| Coke, % wt. | 1.4 | 1.1 |
| LCO, % wt. | 24.3 | 25.6 |
| $C_4=$/TOTAL C4's, % wt. | 0.49 | 0.52 |
| $C_3=$/TOTAL C3's, % wt. | 0.88 | 0.90 |

[1] ASTM 3907-80

0236548

## EXAMPLE XVI

The catalyst from Example XIV was calcined at 1050°F for one hour. Separately vanadium napthanate was dissolved in toluene in proportions such that the total solution volume was three times the pore volume of and the vanadium napthanate present was sufficient to deposit 0.5% V or a known weight of calcined catalyst. The solution was added quickly to the calcined catalyst and mixed vigorously to insure homogeneity. The impregnated catalyst sample was allowed to dry at ambient temperature for at least one hour followed by a two hour drying at 250°F and then at least a three hour calcination at 1050°F until no black residue remained visible on the catalyst. The sample was then steam treated for 5 hours at 1400°F, 100% steam, Opsig.

## EXAMPLE XVII

The catalyst from Example XV was given the same vanadium impregnation treatment and steaming described in Example XVI.

The catalysts of Example XVI and XVII were evaluated for fluid catalytic cracking activity by the MAT test (D 3907-80). These results are given in Table VII and show significantly better activity retention, lower coke make and lower hydrogen yields after impregnation with vanadium metal for the catalyst prepared with a 24.63 A NaY superior performance in use. This improvement in metals tolerance would be pronounced when processing resid type feeds which contain significant quantities of these metal contaminants.

- 44 -

0236548

## TABLE VII

| | 0.5% | 0.5% |
|---|---|---|
| Metal Loading V, % | | |
| Conversion, % wt. | 65.7 | 58.8 |
| Gasoline, % wt. | 49.1 | 45.9 |
| Total $C_4$'s, % wt. | 7.7 | 5.7 |
| Total $C_3$'s, % wt. | 3.6 | 2.9 |
| Total $C_1$&$C_2$, % wt. | 1.1 | 0.8 |
| $C_3$=/TOTAL $C_3$ | 0.73 | 0.83 |
| $C_4$=/TOTAL $C_4$ | 0.39 | 0.56 |
| LCO, % wt. | 22.1 | 25.4 |
| HCO, % wt. | 12.2 | 15.8 |
| Gasoline & Distillate, % wt. | 71.2 | 71.3 |
| Coke, % wt. | 4.1 | 2.5 |
| $H_2$, % wt. | 0.36 | 0.26 |
| $H_2/CH_4$ molecular ratio | 7.46 | 9.21 |

All Examples steamed at 1400°F, 100% steam for 5 hours

MAT   ASTM   D 3907-80.

WHAT IS CLAIMED IS:

1. A process for preparing cracking catalyst composition comprising the following steps:

(a) forming an aqueous slurry containing particles of an effective size for use in fluid catalytic cracking, on a dry solids weight percent basis: 1) 5 to 40 weight percent of a sodium zeolite Y characterized by a $Na_2O$ content of greater than 2 percent by weight and characterized by a unit cell size $(a_o)$ greater than 24.55 and less than 24.66; 2) 5 to 40 percent by weight of an alumina; and 3) 40-90 percent by weight of at least one porous oxide matrix;

(b) spray drying the aqueous slurry of part (a);

(c) ammonium exchanging the spray dried product of step (b) with an effective amount of an ammonium-containing solution under effective ion exchange conditions to provide a product, on a dry basis, containing less than 1.2 weight percent $Na_2O$;

(d) calcining the product of step (c) at an effective temperature for an effective period of time to provide a product characterized by a zeolite component having a unit cell size less than the sodium zeolite Y of step (a) and greater than 24.55; and

(e) ammonium exchanging the product of step (d) under effective conditions to provide a product containing less than 0.8 weight percent $Na_2O$, based on the weight of the solid catalyst.

D-15117

2. The process according to claim 1 wherein in step (a) the alumina is an amorphous alumina and the porous oxide matrix is a kaolin clay.

3. The process according to claim 1 wherein in step (a) the aqueous slurry is prepared by admixing two aqueous slurry mixtures, containing effective amounts of the following components to provide the relative weight percent of such in the finally aqueous slurry, wherein said slurry mixtures comprise:

(1) an aqueous slurry containing said sodium zeolite Y and said alumina; and

(2) an aqueous slurry containing a kaolin clay and a silica sol which was formed from effective amounts of sodium silicate, aluminum sulfate and sulfuric acid.

4. The process according to claim 1 wherein the slurry in step (a) is effectively treated to provide particles wherein at least 90 weight percent of such particles have particle diameters less than 3 microns.

5. The process according to claim 1 wherein the effective temperature of step (d) is greater than 1000°F.

6. The process of claim 5 wherein said product of step (c) is calcined in presence of an effective amount of steam.

7. The process according to claim 5 wherein steam is added in an amount between 0.02 to 0.5 pound per pound of dry catalyst.

8.    The process according to claim 5 wherein the effective period of time is between about 0.05 hours and about 3 hours.

9.    The process according to claim 8 wherein the effective period of time is between about 0.1 hour and about 1 hour.

10.    The process of claim 1 wherein in step (d) the product of step (c) contains between about 5 and about 30 percent by weight water and steam is formed in situ during calcining the product of step (d).

11.    The process of claim 1 wherein said product in step (d) has a zeolite component characterized by a unit cell size greater than 24.58A and less than 24.63A.

12.    The process of claim 1 wherein in step (d) the weight percent $Na_2O$ is less than 1.0.

13.    The process of claim 1 wherein said effective temperature in step (d) is at least 1000°F and said effective period of time is at least 0.1 hour and said calcination is carried out in the presence of an effective amount of steam.

14.    The process of claim 1 wherein said step (d) is carried out in the presence of an effective amount of steam at an effective temperature greater than 1200°F.

15.    The process of claim 14 wherein said effective amount of steam is present in an amount greater than 0.1 pound of steam per pound of product from step (c), on a dry basis.

16. The catalyst of claim 1 wherein said catalyst comprises 10-30 wt. % sodium zeolite, 10-30 wt. % alumina and 50-80 wt. % of a kaolin clay.

17. A process for the catalytic conversion of a hydrocarbon feedstock which comprises contacting said feedstock under catalytic cracking conditions with a cracking catalyst prepared by the following process:

(a) forming an aqueous slurry containing particles of effective size for use in fluid catalytic cracking, on a dry solids weight percent basis: 1) 5 to 40 weight percent of a sodium zeolite Y characterized by a $Na_2O$ content of greater than 2 percent by weight and characterized by a unit cell parameter ($a_o$) greater than 24.50 and less than 24.66; 2) 5 to 40 percent by weight of an alumina; and 3) 40-90 percent by weight of at least one porous oxide matrix;

(b) spray drying the aqueous slurry of part (a);

(c) ammonium exchanging the spray dried product of step (b) with an effective amount of an ammonium-containing solution under effective ion exchange conditions to provide a product, on a dry basis, containing less than 1.2 weight percent $Na_2O$;

(d) calcining the product of step (c) at an effective temperature for an effective period of time to provide a product characterized by a zeolite component having a unit cell size less than the sodium zeolite Y of step (a) and greater than 24.55; and

(e) ammonium exchanging the product of step (d) under effective conditions to provide a product containing less than 0.8 weight percent $Na_2O$, based on the weight of the solid catalyst.

18. The process according to claim 16 wherein in step (a) the alumina is an amorphous alumina and the porous oxide matrix is a kaolin clay.

19. The process according to claim 16 wherein in step (a) the aqueous slurry is prepared by admixing two aqueous slurry mixtures, containing effective amounts of the following components to provide the relative weight percent of such in the finally aqueous slurry, wherein said slurry mixtures comprise:

(1) an aqueous slurry containing said sodium zeolite Y and said alumina; and

(2) an aqueous slurry containing a kaolin clay and a silica sol which was formed from effective amounts of sodium silicate, aluminum sulfate and sulfuric acid.

20. The process according to claim 16 wherein the slurry in step (a) is effectively treated to provide particles wherein at least 90 weight percent of such particles have particle diameters less than 3 microns.

21. The process according to claim 16 wherein the effective temperature of step (d) is greater than 1000°F.

22. The process of claim 21 wherein said product of step (c) is calcined in presence of an effective amount of steam.

23. The process according to claim 22 wherein steam is added in an amount between 0.02 to 0.5 pound per pound of dry catalyst.

24. The process according to claim 21 wherein the effective period of time is between about 0.05 hours and about 3 hours.

25. The process according to claim 24 wherein the effective period of time is between about 0.1 hour and about 1 hour.

26. The process of claim 16 wherein in step (d) the product of step (c) contains between about 5 and about 30 percent by weight water and steam is formed in situ during calcining the product of step (c).

27. The process of claim 16 wherein said product in step (d) has a zeolite component1characterized by a unit cell size greater than 24.58A and less than 24.63A.

28. The process of claim 16 wherein in step (c) the weight percent $Na_2O$ is less than 1.0.

29. The process of claim 16 wherein said effective temperature in step (d) is at least 1000°F and said effective period of time is at least 0.1 hour and said calcination is carried out in the presence of an effective amount of steam.

30. The process of claim 16 wherein said step (d) is carried out in the presence of an effective amount of steam at an effective temperature greater than 1200°F.

31. The process of claim 22 wherein said effective amount of steam is present in an amount greater than 0.1 pound of steam per pound of product from step (c), on a dry basis.

32. The catalyst of claim 16 wherein said catalyst comprises 10-30 wt. % sodium zeolite, 10-30 wt. % alumina and 50-80 wt. % of a kaolin clay.

33. The catalyst prepared according to claim 1.

34. The catalyst prepared according to claim 11.

35. The catalyst prepared according to claim 13.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | US-A-4 085 069 (H. ALAFANDI)  * Column 2, lines 23-65 * | | B 01 J 29/08 // C 10 G 11/05 |
| A | US-A-4 308 129 (E.M. GLADROW)  * Column 5, lines 14-50 * | | |
| A | FR-A-2 280 431 (W.R. GRACE & CO.) | | |
| A. | US-A-3 437 604 (E. MICHALKO)  * Claim 4 * | | |
| A | DE-A-3 204 369 (ENGELHARD)  * Claim 4 * | | TECHNICAL FIELDS SEARCHED (Int Cl 4) |
| A | US-A-4 459 426 (T.V. INWOOD)  * Column 4 * | | B 01 J 29/00 |
| A | US-A-3 945 943 (J.W. WARD) | | |

The present search report has been drawn up for all claims

| Place of search | Date of completion of the search | Examiner |
|---|---|---|
| THE HAGUE | 05-03-1987 | DEVISME F.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82